# EUROPEAN PATENT SPECIFICATION

(11) **EP 3 581 145 B1**
(45) Date of publication and mention of the grant of the patent: **21.12.2022**
(21) Application number: 18305714.0
(22) Date of filing: 12.06.2018
(51) Int. Cl.: A61C 7/14, A61C 7/00

(54) **ASSEMBLY FOR THE PLACEMENT OF AN ORTHODONTIC BRACKET AND METHOD FOR MANUFACTURING SUCH ASSEMBLY**
ANORDNUNG ZUR PLATZIERUNG EINES KIEFERORTHOPÄDISCHEN BRACKETS UND VERFAHREN ZUR HERSTELLUNG SOLCHER ANORDNUNG
ENSEMBLE DE PLACEMENT D'UNE ATTACHE ORTHODONTIQUE ET PROCÉDÉ DE FABRICATION D'UN TEL ENSEMBLE

(43) Date of publication of application: 18.12.2019
(73) Proprietor: 3C, 93150 Blanc Mesnil (FR)
(72) Inventor: CURIEL, Bruno, 43583 Raanana (IL); COUDRIN, Benjamin, 31490 Leguevin (FR); ERNENWEIN, Didier, 92420 Vaucresson (FR); HARVENT, Jacques, 94170 Le Perreux sur Marne (FR)
(74) Representative: Plasseraud IP

(56) References cited:
- EP-A1- 2 783 655
- DE-U1- 20 009 331
- KR-B1- 101 461 317
- US-A1- 2008 057 460
- US-A1- 2016 135 926
- US-A1- 2016 346 064
- US-A1- 2017 281 314

## Description

### FIELD OF THE DISCLOSURE

The disclosure relates to an assembly for the orthodontic treatment of a patient's teeth, to a method for the placement of an assembly for the orthodontic treatment of a patient's teeth and a use of an orthodontic system of such an assembly.

### BACKGROUND OF THE DISCLOSURE

In the field of orthodontics, it is known to fit a patient suffering from malocclusion of the jaws and/or dental misalignment with an orthodontic appliance intended to align the teeth over the course of a period of treatment. Each orthodontic appliance may be produced individually for each patient or not. Different treatment techniques exist on the market.

In a known manner, orthodontic appliances exist comprising one or a plurality of orthodontic wires, a plurality of brackets which are each provided with one or a plurality of slots wherein the orthodontic wire may be inserted, or attachment means whereby the wire may be held. These appliances are offered in two versions.

In the labial version, the brackets are arranged on the outer (labial) surface of the teeth. The orthodontic archwire is then inserted into the slots of the brackets so as to align the teeth. In this version, the brackets are visible when the subject wearing them smiles.

In the lingual version, the brackets are arranged on the inner (lingual) surface of the teeth. The brackets are then externally invisible.

The problem of these orthodontic appliances lies, inter alia, in the placement thereof and in the time required for this placement.

In a known manner, the treatment may be customized or non-customized.

When the treatment is not customized, it is essential to position the brackets at precise locations on the teeth so as to minimise the number of bends on the orthodontic arch. The correct position of each tooth is dependent on the interaction between the orthodontic bracket and the arch. Therefore, the dental alignment result is greatly dependent on the competency of the practitioner in compensating for the variability of the morphology of the teeth on the arch.

Indeed, as a general rule, each tooth for each patient has its own morphology. It is therefore easy to understand that a standard bracket, i.e. mass-produced, will never allow the expression of the optimal movement of the tooth. For this reason, the orthodontist intervenes by creating some bends on the orthodontic arch: these bends compensate for the difference in morphology.

The placement of such orthodontic appliances even if performed by specialists in the field (orthodontists) remains hazardous in some cases. The precise positioning of the brackets on the teeth remains difficult and makes it hardly possible to obtain an ideal alignment due to the variable morphology of the labial and/or lingual surfaces of the teeth.

To remedy this problem, it is known to use customized methods, more particularly in lingual versions where the morphology of the teeth is highly variable.

When the treatment is customized, i.e. custom-made, two major categories of systems are known.

The first category includes systems using standard brackets. These brackets may be arranged arbitrarily on the teeth, and an arch then needs to be adapted to transmit the force and the movement required for the displacement of the teeth. This arch is designed digitally and bent threedimensionally by bending robots.

The second category includes systems using customized brackets and a customized arch produced two-dimensionally. The benefit of using both a customized arch and customized brackets is that of reducing the number of bends on the arch. A high number of bends prevents proper sliding of the arch and hence proper levelling of the teeth.

In order to use these customized systems and so as to position the orthodontic brackets and/or the orthodontic archwire correctly, customized system production requires digital setup of the orthodontic treatment. The digital setup is a simulation of the corrected position of the teeth performed on the basis of the malocclusion.

Once this simulation has been carried out, the orthodontic brackets and the orthodontic arches are designed digitally and positioned digitally on this simulation. The arches and the brackets are subsequently produced for example by CAD/CAM. The subsequent step consists of producing a transfer system so as to enable the positioning of the brackets produced (actual) either on the malocclusion model or directly in the mouth.

For this, it is therefore essential either to reposition the brackets correctly on the malocclusion and construct a thermoformed or silicone transfer tray, or produce rigid positioning jigs so as to reposition the brackets produced directly in the mouth.

The objective being obviously to be able to position in the mouth, i.e. on the patient's teeth, the brackets in an identical scenario to the virtual positioning of the same virtual brackets on the virtual teeth (digital setup).

In these two scenarios, the following problems arise:
- In order to reposition the brackets correctly on the malocclusion model, it is for example necessary to manufacture a plaster malocclusion model or imprint the malocclusion model directly by stereolithography.
- It is then necessary to produce a mould on top, referred to as a transfer tray which is frequently made of silicone or is thermoformed: this is not always very precise as it is necessary to release the whole (transfer tray and brackets produced) and subsequently replace the brackets very precisely in this tray. Any inaccurate placement of the brackets in the tray reduces the benefit of customized systems.
- Second source of imprecision: as the trays are flexible, the practitioner must press perfectly against the tray to place all the brackets in contact with the teeth
- As regards the rigid jig system, there is also a source of error associated with the manual positioning of the brackets in these jigs; any bracket inserted incorrectly into the jigs would similarly give rise to a difference between the digital simulation of the alignment of the teeth and the actual alignment of the teeth in the mouth.

In sum, any inaccurate repositioning would jeopardise the perfect efficacy of customized systems and we have seen that all current systems include sources of repositioning error at different possible levels.

Therefore, it is known to use positioning systems for holding the brackets in a suitable position during the bonding thereof onto the teeth. It is known, for example from the document US7094053B2 that a rigid jig conforming to one or a plurality of teeth is attached to one or a plurality of brackets by separate and removable intermediate parts. Although the system described theoretically makes it possible to minimise errors during positioning, errors remain during the assembly of the intermediate part with the bracket and with the jig. It is also known from the document EP2571449A1 that a rigid jig conforming to the tooth fits closely to the base of the bracket on at least a portion of at least one of the edges thereof. However, positioning errors are still present given that the brackets and the jig are not in one piece. These systems must be adapted for each geometry of the brackets. The use of increasingly small brackets renders the design and production of the intermediate parts and of the attachment systems difficult, the positioning errors are amplified, and the systems complicated to handle. The use of such orthodontic appliances frequently requires long periods of training (for lingual procedures), and frequently requires significant time-in-chair. The orthodontic archwire is inserted into the slots of the brackets after bonding said brackets in the mouth.

US 2017281314A discloses an assembly for positioning a bracket wherein the assembly comprises a pearl and a cap, and wherein the cap is connected to the pearl by a breakable connection.

### SUMMARY OF THE DISCLOSURE

The aim of the present disclosure is that of providing an orthodontic system for the placement of an appliance for the orthodontic treatment of a patient's teeth not having at least some of the drawbacks of the orthodontic systems known from the prior art.

In the following description, a pearl is smoother than the brackets known from the prior art, but has the function of a bracket for the orthodontic wire or archwire. Such a pearl is placed on the tooth and is provided with an opening to receive the orthodontic archwire.

As such, all the above sources of errors in terms of the positioning of the pearls (produced) on the teeth with respect to the positioning of the digital pearls on the digital simulation are eliminated.

After bonding this assembly in the mouth, the practitioner merely needs to separate (potentially at the pre-fracture zone designated in the single piece) the positioning system from the pearls with the latter remaining bonded to the teeth.

This aim of the disclosure is achieved by means of an assembly for the orthodontic treatment of a patient's teeth according to claim 1.

As such, advantageously, the placement of the appliance is facilitated and the correct positioning of the pearls is ensured.

According to the invention, the assembly comprises a connector, the connector being breakable for detaching the pearl from the cap.

The connector is thus like a removable link between the pearl and the cap.

Another aim of the disclosure is achieved by means of an orthodontic system for the orthodontic treatment of a patient's teeth, the orthodontic system comprising several assemblies.

In another example, the assemblies are each placed on a different tooth.

The present disclosure also presents a method for the placement of an assembly for the orthodontic treatment of a patient's teeth not having at least some of the drawbacks of the orthodontic systems known from the prior art. In particular, the method for the placement of an appliance according to the disclosure is facilitated and correct positioning of the pearls is ensured compared to known methods.

The present disclosure also presents a method for the placement of an assembly for the orthodontic treatment of a patient's teeth, the assembly comprising a pearl and a cap, the pearl being provided with a slot into which an orthodontic wire can be inserted, the cap being shaped individually to the shape of the tooth, and the cap being connected to the pearl, wherein the assembly is positioned on the tooth so as the cap is in contact with the corresponding shape of the tooth and the pearl is in contact with the tooth.

In preferred embodiments of the disclosure, one and/or another of the following arrangements may optionally be used:
- the pearl is attached to the teeth,
- the pearl is detached from the cap,
- the pearls are coated;
- the external surface of the pearls comprises a smooth material;
- the material of the slot comprises metal;
- the slot is in metal,
- an orthodontic wire is inserted into the slot of the pearl,
- the orthodontic wire is inserted into the slot of the pearl prior the placement of the assembly on the patient's tooth,
- the orthodontic wire is inserted into the slot of the pearl after the placement of the assembly on the patient's tooth,
- the orthodontic wire is inserted into the slot of the pearl after the placement of the assembly on the patient's tooth, the pearl being attached to the tooth,
- several assemblies are placed respectively on a tooth.

The present invention also provides a method of manufacturing an assembly for the orthodontic treatment of a patient's teethaccording to claim 5.

In preferred embodiment, the additive manufacturing is made with ceramic material.

The present disclosure also presents a use of the orthodontic system for a contention treatment not having at least some of the drawbacks of the orthodontic systems known from the prior art.

### BRIEF DESCRIPTION OF THE DRAWINGS

Further features and advantages of the disclosure will emerge in the course of the following description of one of the embodiments thereof, given by way of non-limiting example, with reference to the drawings attached. In the various figures, the same references denote identical or similar elements.

In the drawings:
- Figure 1 is a schematic perspective view of an appliance according to the prior art;
- Figure 2A is a schematic perspective view of an appliance according to the disclosure;
- Figure 2B is a bottom view of the positioning of the appliance in figure 2A after separation from the cap;
- Figure 3A is a perspective view of a pearl of the appliance in figure 2A;
- Figure 3B is a perspective view of the pearl in figure 3A;
- Figure 4A is a perspective side view of a pearl according to a further embodiment,
- Figure 4B is a perspective front view of the pearl in figure 4A;
- Figure 4C is a perspective side view of the assembly according to the disclosure;
- Figure 4D is a perspective front view of the assembly in figure 4C;
- Figure 4E is a perspective front view of the assembly of the disclosure, the assembly being placed on the lingual side of the tooth to be treated;

### DETAILED DESCRIPTION OF THE DISCLOSURE

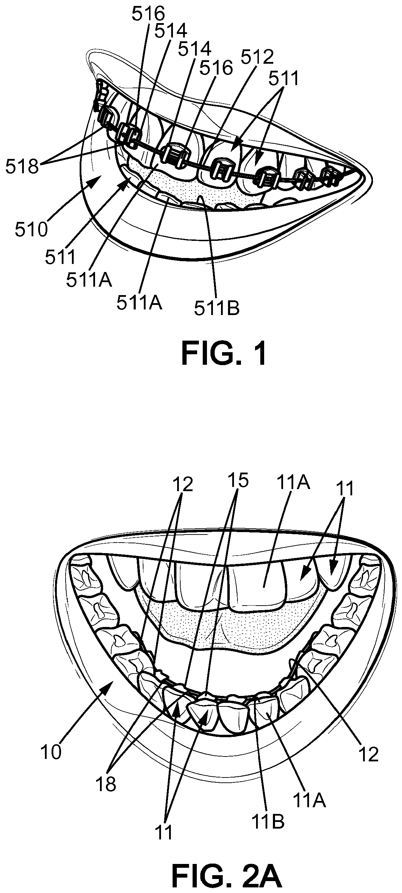

Figure 1 illustrates schematically an orthodontic appliance 510 known in the prior art and placed on a patient's teeth 511 according to a method known from the prior art. The appliance 510 comprises an orthodontic wire 512 and a plurality of brackets 516 and bases 514. Each base 514 is fixed between a corresponding tooth 511 and bracket 516. Each bracket 516 is provided with a slot 518 wherein the orthodontic wire 512 is inserted.

Generally, as disclosed in document US 8678817 B2, such a bracket includes a mounting base for attachment to a tooth surface and an archwire slot formed upon the base and sized for receiving an orthodontic archwire (or orthodontic wire).

Figure 1 schematically illustrates an appliance 510 known in the prior art that consists of a labial version, wherein the brackets are arranged on the outer (labial) surface 511A of the teeth 511. The orthodontic wire 512 is inserted into the slots 518 of the brackets 516 so as to align the teeth 511 over the course of the treatment. In this version, the brackets 516 are visible when the patient smiles.

Due to their geometry and/or dimensions, such known brackets 516 are easily visible, that make the brackets 516 unaesthetic. Furthermore, and especially when the brackets are placed on the lingual surface of a tooth (not depicted on the figs.), the brackets as already known could cause a discomfort, when, for example, the tongue touches the brackets.

The patient prefers for this reason to have an appliance 10 according to the disclosure and described hereinafter.

Figure 2A illustrates a schematic perspective view of an appliance 10 according to the disclosure.

This embodiment consists of a lingual version, wherein pearls 15 that replace the brackets 16 and bases 14 are arranged on the inner (lingual) surface 11B of the teeth 11. The pearls 15 are then outwardly invisible. The disclosure is however not limited to such a version, the labial version being also part of the disclosure also not depicted on the figures.

In both versions (lingual or labial), the placement of the appliance 10 would be a difficult procedure should it be necessary to position each pearl 15 individually; the pearl 15 is generally bonded onto the tooth 11. However, according to the disclosure, this difficulty is overcome thanks to the assembly 30 (described below) and to the fact that the pearls are linked and placed together optimally on each tooth 11 to be treated.

Such a pearl 15 allows notably being blended with the tooth. More precisely, with a pearl defined in the disclosure, the patient does not feel (or barely) it in his/her mouth. Besides, such a pearl is very aesthetic since it is little or no visible. The pearl 15 has the function of a bracket for the orthodontic wire 12, but it is smaller than the brackets known from the prior art. Therefore, the pearls 15 according to the disclosure are less incommoding. In addition, with the appliance 10 of the disclosure, no base is needed on the contrary to the appliance known from the prior art, where a base is placed between the tooth and the bracket.

As for embodiments known from the prior art, the embodiment in the lingual version (figure 2A) is more visually appealing than in a labial version (not depicted). In addition, the labial version is more visually appealing than the embodiment known from labial version from the prior art (figure 1) and the lingual version (figure 2A) is more visually appealing than the embodiment known from the prior art (not depicted). However, the lingual version (figure 2A) is more difficult to place on the patient's teeth 11, since access to the teeth 11 is more difficult on the lingual side than on the labial side.

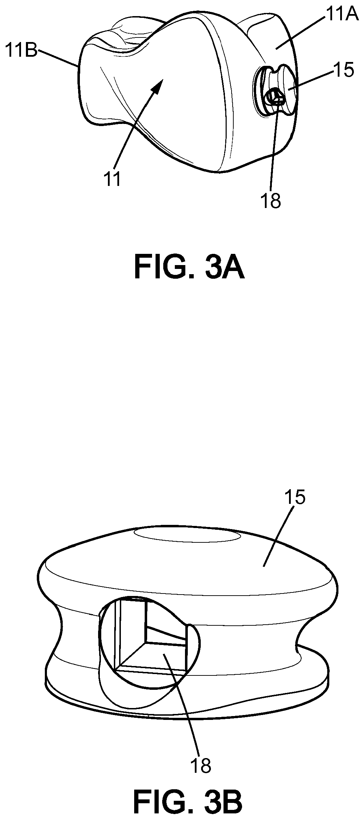

As seen more clearly in figures 3A and 3B, each pearl 15 is provided with a slot 18 wherein the archwire or orthodontic wire 12 is inserted (not shown in figures 3A-3B). This slot 18 may have a square cross-section, as represented in figure 3B, but the cross-section may also be rectangular or circular or any other shape. The orthodontic wire 12 may for its part have a round or square cross-section or a cross-section of any other shape.

The pearls 15 may be of any shape, they may for example include wings, an intermediate part for optionally receiving chains, a second slot. The pearls 15 are attached to the teeth 11 using known attachment means, for example by bonding.

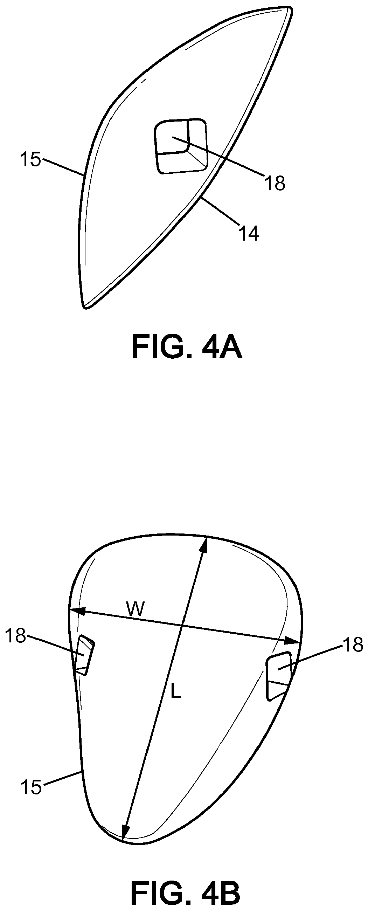

A first embodiment of the pearl according to the disclosure is depicted on Figs. 3A and 3B and a second embodiment of the pearl according to the disclosure is depicted on Figs. 4A to 4E. The second embodiment has a surface opposite to the surface in contact with the teeth which does not comprise any sharp corner. In other words, there is no surface irregularity or roughness on the surface. The surface is therefore smooth. The surface thus shaped in such a way that it completes the external aspect of a tooth 11.

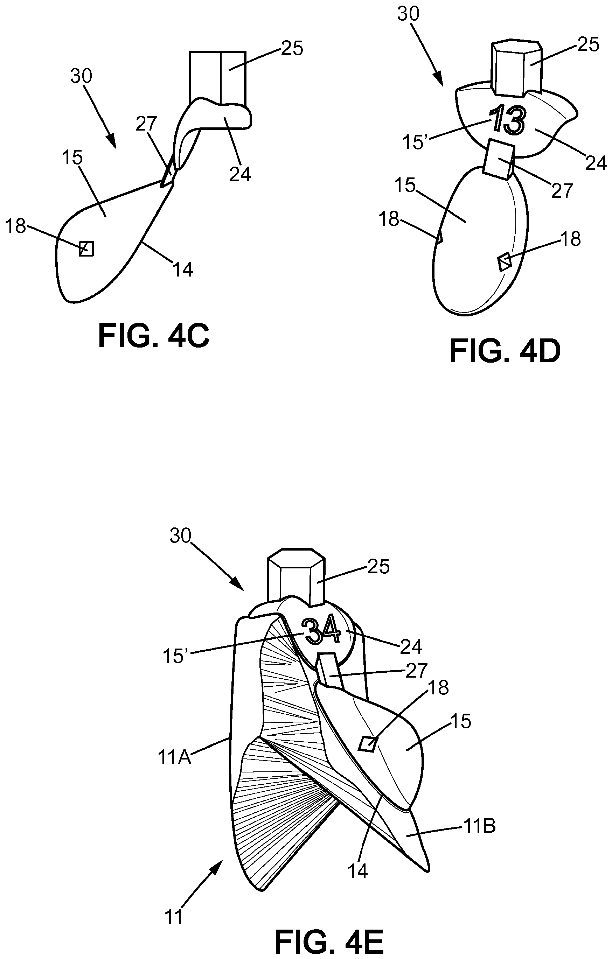

In addition, the surface has a domed shape. As depicted in figure 4C for example, the surface is convex. The convexity of the surface may be more or less pronounced.

Advantageously, according to the tooth onto which it will be placed, the dimensions of the pearl 15 is comprised between 2,0 mm and 3,0 mm in width W and between 3,0 mm and 4,0 mm in length L. Preferably, the volume is comprised between 2,0 mm³ (cubic millimeter) and 25,0 mm³. The pearl 15 has thus a particular compact size relative to a tooth. For example, on an adult tooth, the pearl 15 occupies between 20% and 99% of the lingual surface of the tooth. The pearl may have a shape that is anatomic and/or isomorphic with the teeth. In other words, for a tooth that is wider on its top free end than on its base, the shape of the pearl 15 can also be wider toward the top free end of the tooth than toward the base of the tooth.

In addition, the pearl weights between 1 g (gram) and 10 g.

The pearl 15 is for example made of ceramic material. Ceramic has a similar color to the one of a tooth, which improves the aesthetic property of the pearl 15. In addition, ceramic is biocompatible, which means that it is compatible with an utilization for a human body. Ceramic is also well a material resistant to load, which provide a good bearing of the pearl 15 regarding the load applied by the orthodontic wire 12 on the pearl 15. However, the pearl 15 may be made of other materials such as biocompatible resins.

Manufacture in one piece makes it possible to do away with any assembly problems associated with manual handling. Such an orthodontic appliance 10 is especially manufactured in one piece when it is made of plastic material, for instance biocompatible resins.

Besides, it may be manufactured in at least two parts assembled together by attaching means, like snap-fitting for instance. Such a manufacture in two parts allows an optimization of the quantity of material used and allows thus a reduction of the costs. The manufacture in at least two parts may be particularly applied when the orthodontic appliance 10 comprises other material such as ceramic. Actually, the ceramic materials are generally more expensive than the plastic ones. In addition the materials used in orthodontic treatment (plastic and ceramic) need to be biocompatible. Besides, the manufacture in at least two parts may be applied for technical / economic reasons.

Besides, the pearl can be coated. More precisely, the external surface of the pearl 15 can be coated. In fact, the pearl 15 could be manufactured in metal for technical or economic reasons and coated with a smooth material at its surface to increase the patient's comfort. Likewise, the pearl 15 can be made of a smooth material; in that case, the slot 18 can be in metal in order to facilitate the insertion of the wire and to reduce the friction between the wire and the slot.

A smooth material is for instance a ceramic material or a plastic material.

These particular dimensions of the pearl 15 provide an aesthetic result of the pearl. In addition, when a person runs his/her tongue over his/her tooth, he/she does not have the feeling the tooth comprises a foreign connector on its surface. Due to the small dimensions of the pearl, the tongue does not hook on the pearl, or is not skinned when running over the pearl.

Figures 4C and 4D illustrate an assembly 30. The assembly 30 is used for the placement of the pearl 15 on the tooth 11. The assembly 30 comprises the pearl 15 and a cap 24.

The cap 24 is destined to be placed on the tooth 11. More precisely, the cap 24 is destined to be placed on the occlusal or incisive surface of the tooth 11. The cap 24 determines the placement of the pearl 15 on the tooth 11, as depicted in figure 4E. In other words, the cap 24 is like a guide for the correct placement of the pearl 15 on the tooth 11.

The cap 24 is shaped individually to the shape of the tooth 11. The cap 24 is thus custom made according to the tooth 11 on which it is destined to be placed.

Still with reference to figures 4C and 4D, the cap 24 is connected to the pearl 15. The connection of the cap 24 and the pearl 15 is made via a connector 27.

The connector 27 is easily breakable, so as to separate the pearl 15 to the cap 24. The connector 27 represents a pre-fracture zone of the assembly 30. The rigidity of the connector 27 is chosen such that, on one hand, the cap 24 and the pearl 15 are rigidly maintained together and, on the other hand, it is easy to break the connector 27. In order to be easily breakable, each connector 27 can have a fracture zone near the pearl 15; such a breakable zone allows a complete separation of the pearl 15 from the connector 27.

As a result, when the pearl 15 is fixed onto the tooth 11, for example by bonding, the cap 24 can be separated from the pearl 15 by breaking the connector 27.

In addition, the cap 24 is provided with an arm 25.

Figure 4E is a perspective front view of the assembly 30 with the arm 25, the whole placed on the lingual side 11B on a tooth 11 to be treated. The whole could obviously be arranged on the side of the outer face 11A of the teeth 11. The cap 24 is arranged on a tooth 11. In this position, the pearl 15 is correctly positioned on the tooth 11.

When several assemblies 30 are placed on the teeth, i.e. an assembly 30 per tooth 11, the pearls 15 form a first part of the appliance 10. The orthodontic wire 12, when provided within the slots of the pearls 15, forms the second part of the appliance 10.

Regardless of the version (lingual or labial), the appliance 10 may be placed on the lower jaw (mandible) or on the upper jaw (maxilla).

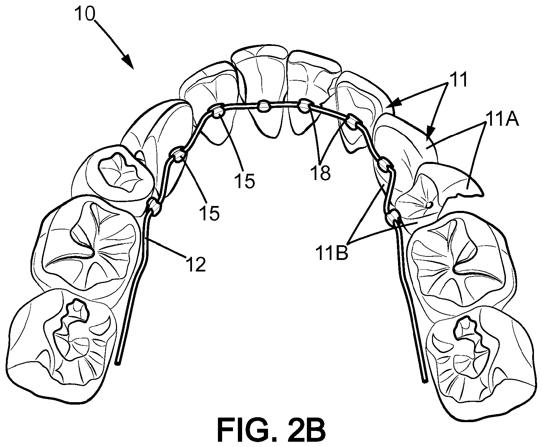

Furthermore, regardless of the version, the appliance 10 may include the same number of pearls 15 as teeth 11 in the mandible or indeed a lower number. Indeed, not all the teeth 11 in a jaw necessarily need to be treated and, in this case, it is appropriate to only place pearls on the teeth to be treated. As such, the appliance 10 may include pearls which are not all arranged in succession from one tooth to the adjacent tooth. In the example illustrated in figure 2B, the jaw includes twelve teeth 11, whereas only eight are to be treated; therefore, the appliance merely includes eight pearls 15. In this example, the pearls are in succession from one tooth to the other. The appliance may for example be arranged on merely two teeth, but can be arranged on more than two teeth as disclosed above.

When the pearls 15 are in succession from one tooth to the other, the slots 18 of the pearls 15 form a channel for the orthodontic wire 12. Indeed, the pearls are sufficiently close from each other to form a sort of tube that determines a passage of the orthodontic archwire 12.

In order to facilitate the placement of an orthodontic appliance 10 as described above and ensure correct positioning of each of the pearls 15 on the relevant tooth 11, the disclosure relates to a placement method.

The placement method according to the disclosure is described with reference to the appliance 10 illustrated in figures 2A and 2B is a lingual appliance, but it is understood that it is applicable in the same way to the placement of a labial version appliance 10.

According to the disclosure, the positioning of the pearl 15 is carried out using the assembly 30.

The caps 24 are preferably shaped individually to the shape of the teeth 11. As such, by way of example, the cap 24 is shaped to a tooth 11, whereas the adjacent cap is shaped to the adjacent tooth to be treated.

In order to facilitate the placement of an orthodontic appliance 10 as described above and ensure correct positioning of each of the pearls 15 on the relevant tooth 11, at least one mark 15' may be provided on the assembly 30.

Such a mark 15' facilitates the placement of the assembly 30 on the correct tooth. For instance, each pearl 15 or preferably each cap 24 is provided with a mark 15'.

For instance, the mark 15' may correspond to the tooth number onto which the corresponding pearl is to be placed (see Figs. 4D and 4E). In the examples depicted, the mark 15' may be 13 as depicted on Fig. 4D and the mark 15' may be 34 as depicted on Fig. 4E.

In order to use the assembly 30 and so as to position the pearl 15 and/or the orthodontic archwire 12 correctly, a digital setup of the orthodontic treatment is required. The digital setup is a simulation of the corrected position of the teeth performed on the basis of the malocclusion. The digital initial (malocclusion) model is obtained directly from the output of an intraoral scanner or from the scan of an imprint (for example in silicone) of the patient's teeth.

Once this simulation has been carried out, the corrected position of the teeth is used to design and position the orthodontic arches 12 and the pearls 15 correctly.

Subsequently, the assembly 30 is manufactured so as to be able to place correctly the pearl 15 and thus the appliance 10, in the mouth.

To position the pearl 15 on the patient's teeth 11, the method according to the disclosure consists of inserting the assembly 30 into the patient's mouth, the assembly 30 being moved closer to the teeth of the jaw (inferior or superior) to be treated, until the cap 24 comes into contact with the respective teeth 11; at this time, the pearl 15 is in contact with the relevant teeth 11 and is correctly positioned.

Once the pearl is 15 attached to the teeth 11 using attachment means, the cap 24 is separated from the pearl 15. For instance, the separation may occur in breaking the connectors 27 located between the pearl 15 and the cap 24. Such a break may be done manually (i.e. without any tool) or not (cut).

After separation, only the pearl 15 remains in the mouth.

The placement method of a pearl 15 on a tooth 11 is repeated as much as necessary. Finally, one or several teeth comprise a pearl 15.

In an example, regarding the orthodontic wire 12, it may be inserted into the slot 18 of each of the pearls prior to positioning the assembly 30 on the teeth 11, i.e. prior to placing the pearls 15 on the teeth 11. In this case, the orthodontic wire 12 connects together the assemblies 30. Thus, once the assembly 30 has been placed on the teeth 11 and the pearls 15 attached, the cap 24 are detached from the pearls 15 and the appliance 10 is then correctly placed in the mouth.

In another example, the orthodontic wire 12 may be inserted into the slot 18 of each of the pearls 15 after positioning the assembly 30 on the teeth 11, i.e. after placing the pearls 15 on the teeth 11. In this case, once the assembly 30 has been placed on the teeth 11 and the pearls 15 attached, it is appropriate to insert the orthodontic wire 12 into the slots 18 of the pearls 15.

The caps 24 may be detached from the pearls 15 prior or after the insertion of the orthodontic wire 12 into the slots 18. The appliance 10 is then correctly placed in the mouth.

Another object of the disclosure is a method of manufacturing the assembly 30.

According to the invention, the assembly 30 may be manufactured by additive manufacturing. For example, the additive manufacturing is three-dimensional printing. Three-dimensional printing reduces costs and increases productive capacity.

Advantageously, the assembly 30 can be made of ceramic materials or biocompatible resin.

According to the invention, the assembly 30 may also be manufactured by subtractive manufacturing. For example, the subtractive manufacturing is done by cutting materials with a CNC (computer numerical control) milling machine or with a laser cutting machine.

According to the invention, the assembly 30 may also be made by casting metal or ceramic or PEEK from a mould.

According to the disclosure another use of the appliance 10 than the orthodontic treatment described above, is for a contention treatment. Such a contention treatment is generally made during the entire life of the patient. After orthodontic treatment as disclosed above, the appliance is not removed from the month of the patient, but maintained in order to avoid any future teeth displacement.

## Claims

1. An assembly (30) for the orthodontic treatment of a patient's teeth (11), the assembly (30) being made in one piece and comprising a pearl (15) and a cap (24), the pearl (15) being provided with a slot (18) into which an orthodontic wire (12) can be inserted, the cap (24) being shaped individually to the shape of the tooth (11), wherein the cap (24) is connected to the pearl (15), wherein in addition the cap (24) is provided with an arm (25) having a free end and wherein the assembly (30) further comprises a connector (27), the connector (27) being breakable so that the cap (24) is separated from the pearl (15) by breaking the connector (27).

2. The assembly (30) of the preceding claim, wherein the pearl (15) has a surface opposite to the surface in contact with the teeth which does not comprise any sharp corner.

3. An orthodontic system for the orthodontic treatment of a patient's teeth (11), the orthodontic system comprising several assemblies (30) according to claim 1 or 2.

4. The orthodontic system of the preceding claim wherein the assemblies (30) are each to be placed on a different tooth (15).

5. A method of manufacturing an assembly (30) according to claim 1, wherein the assembly (30) is obtained by additive manufacturing, subtractive manufacturing or casting

6. The method of the preceding claim, wherein the additive manufacturing is made with ceramic material.

## Patentansprüche

1. Anordnung (30) für die kieferorthopädische Behandlung von Zähnen (11) eines Patienten, wobei die Anordnung (30) aus einem Stück hergestellt ist und eine Perle (15) und eine Kappe (24) umfasst, wobei die Perle (15) mit einem Schlitz (18) versehen ist, in den ein kieferorthopädischer Draht (12) eingeführt werden kann, wobei die Kappe (24) individuell an die Form des Zahns (11) angepasst ist, wobei die Kappe (24) mit der Perle (15) verbunden ist, wobei die Kappe (24) zusätzlich mit einem Arm (25) versehen ist, der ein freies Ende aufweist, und wobei die Anordnung (30) ferner einen Verbinder (27) umfasst, wobei der Verbinder (27) zerbrechlich ist, so dass die Kappe (24) durch Brechen des Verbinders (27) von der Perle (15) getrennt wird.

2. Anordnung (30) nach dem vorhergehenden Anspruch, wobei die Perle (15) eine Oberfläche aufweist, die der mit den Zähnen in Kontakt stehenden Oberfläche gegenüberliegt, und die keine scharfen Ecken umfasst.

3. Kieferorthopädisches System für die kieferorthopädische Behandlung der Zähne (11) eines Patienten, wobei das kieferorthopädische System mehrere Anordnungen (30) nach Anspruch 1 oder 2 umfasst.

4. Kieferorthopädisches System nach dem vorhergehenden Anspruch, wobei die Anordnungen (30) jeweils auf einem anderen Zahn (15) zu platzieren sind.

5. Verfahren zur Herstellung einer Anordnung (30) nach Anspruch 1, wobei die Anordnung (30) durch additive Fertigung, subtraktive Fertigung oder Gießen hergestellt wird.

6. Verfahren nach dem vorhergehenden Anspruch, wobei die additive Fertigung mit keramischem Material durchgeführt wird.

## Revendications

1. Ensemble (30) pour le traitement orthodontique des dents (11) d'un patient, l'ensemble (30) étant formé en une pièce et comprenant une perle (15) et un capuchon (24), la perle (15) étant dotée d'une fente (18) dans laquelle un fil orthodontique (12) peut être inséré, le capuchon (24) étant façonné individuellement à la forme de la dent (11), dans lequel le capuchon (24) est raccordé à la perle (15), dans lequel en outre le capuchon (24) est doté d'un bras (25) ayant une extrémité libre et dans lequel l'ensemble (30) comprend en outre un raccord (27), le raccord (27) pouvant se rompre de manière à ce que le capuchon (24) soit séparé de la perle (15) par rupture du raccord (27).

2. Ensemble (30) selon la revendication précédente, dans lequel la perle (15) a une surface opposée à la surface en contact avec les dents qui ne comprend pas de coin pointu.

3. Système orthodontique pour le traitement orthodontique des dents (11) d'un patient, le système orthodontique comprenant plusieurs ensembles (30) selon la revendication 1 ou 2.

4. Système orthodontique selon la revendication précédente dans lequel les ensembles (30) doivent chacun être placés sur une dent différente (15).

5. Procédé de fabrication d'un ensemble (30) selon la revendication 1, dans lequel l'ensemble (30) est obtenu par impression 3D, fabrication soustractive ou moulage.

6. Procédé selon la revendication précédente, dans lequel l'impression 3D est réalisée avec un matériau céramique.
